# EUROPEAN PATENT APPLICATION

(11) **EP 4 592 236 A1**
(43) Date of publication of application: **30.07.2025**
(21) Application number: 23868600.0
(22) Date of filing: 20.09.2023
(51) Int. Cl.: B66B 5/28, B66B 5/00, B66B 7/04

(54) **EFFECTIVE GRAVITY CONTROL DEVICE INSTALLED IN BUILDING**

(30) Priority: 20.09.2022 KR 20220118429
(71) Applicant: Liin Technologies Incorporated, Newport News, Virginia 23606 (US); Space Liintech Co., Ltd., Daejeon 34054 (KR)
(72) Inventor: YOON, Hargsoon, Yorktown, Virginia 23693 (US); PHAM, Huu Vu, Hampton, Virginia 23666 (US)
(74) Representative: Modiano, Gabriella Diana
(86) International application number: PCT/KR2023/014327
(87) International publication number: WO 2024/063548

(57) **Abstract**

The present invention relates to an effective gravity control device which is installed so as to have a falling space to be a vertical space in a building, and which implements a zero gravity, microgravity, low gravity, or pseudogravity state of an internal module mounted in a moving external module. The effective gravity control device, according to one embodiment of the present invention, comprises: a dual module which comprises an external module and an internal module; an actuator which is installed at the upper side of a falling space in a space for controlling and monitoring a change in gravity applied to the dual module, and which moves the external module so that, according to a control signal, the external module has at least one physical quantity; and a sliding frame which is installed in a space at the lower side of the falling space and provides a path for taking the dual module into/out from the falling space.

## Description

### TECHNICAL FIELD

The following description relates to an effective gravity control device installed in a building, and more specifically, to a gravity control device installed with a vertical space in a building as a falling space.

### BACKGROUND ART

In general, zero gravity or microgravity refers to a state in which the Earth's gravity is canceled out and the effective gravity is close to zero, meaning that one feels weightless inside a satellite or spaceship orbiting the Earth or an elevator in free fall.

One way to create a state equivalent to zero gravity on Earth is to let an object fall freely. However, on Earth, since an external force such as air resistance is applied to an object in addition to gravity while the object is falling, it is difficult to make the effective gravity acting on the object approach zero.

Conventionally, although some experimental devices have been proposed to understand and experience the phenomenon of gravity change, most of them have complex configurations and are expensive, making it difficult to easily understand and experiment with gravity change, zero gravity, or microgravity.

### DISCLOSURE OF THE INVENTION

### TECHNICAL GOALS

An aspect of the effective gravity control device of the present disclosure is to suggest a device and system that may induce changes in gravity such as zero gravity, microgravity, or pseudo gravity by utilizing space within a building.

In addition, an aspect of the effective gravity control device of the present disclosure is to suggest a structure that utilizes a vertical space formed within a building, but does not interfere with the operation of an elevator when the vertical space is a space in which the elevator moves.

An aspect of the effective gravity control device of the present disclosure is to suggest a dual module device capable of inducing a change in effective gravity such as zero gravity, microgravity, low gravity, or pseudo gravity, and a control method for controlling the same.

In addition, an aspect of the effective gravity control device of the present disclosure is to suggest a device and a control method that configures an external module and an internal module in the form of a dual module so that the internal module located inside the external module may stably maintain a gravity change state without the action of external force such as air resistance.

In addition, an aspect of the effective gravity control device of the present disclosure is to suggest a specific control method for efficiently controlling the movement of a dual module based on data acquired from various sensor units.

### TECHNICAL SOLUTIONS

In order to achieve the above-described aspects, according to one embodiment of the present disclosure, there is provided an effective gravity control device which implements a zero gravity, microgravity, low gravity, or pseudo gravity state of an internal module mounted in a moving external module in a falling space formed in parallel with a vertical space in a building or to be shared with the vertical space, the effective gravity control device including: a dual module including an external module in which a movement space for the internal module is provided inside and at least one physical quantity related to movement is controlled, and an internal module that moves independently from the external module within the movement space by an external force transmitted through the external module; an actuator which is installed at an upper side of a falling space in a space for controlling and monitoring a change in gravity applied to the dual module, and which moves the external module so that, according to a control signal, the external module has at least one physical quantity; and a sliding frame which is installed in a space at the lower side of the falling space and provides a path for taking the dual module into/out from the falling space.

In addition, the effective gravity control device according to one embodiment of the present disclosure may further include a shock absorbing section installed on a bottom portion of the falling space and absorbing shock applied to the building from the dual module.

In addition, the effective gravity control device according to one embodiment of the present disclosure may further include: a position detection sensor that detects a position of the internal module within the movement space; and a control unit that generates a control signal that controls at least one physical quantity related to the movement of the external module based on the position of the internal module detected by the position detection sensor.

### EFFECTS OF THE INVENTION

The effective gravity control device including the dual module of the present disclosure and the control method thereof can induce changes in gravity such as the zero gravity, microgravity, or pseudo gravity by utilizing the space within the building. In particular, a control section that controls and monitors changes in gravity, a module unit that transports an object and applies changed gravity to the object, and an experiment section that performs an experiment on the object transported by the module unit can be integrally installed within a single building to provide an integrated control device and system.

In addition, the effective gravity control device including the dual module of the present disclosure and the control method thereof have an advantage in that the gravity control device and system of the present disclosure can be applied even in a building in use by presenting a structure that utilizes the vertical space in the building but does not interfere with the operation of the elevator when the vertical space is a space in which the elevator moves.

The effective gravity control device including the dual module of the present disclosure and the control method thereof have the advantage of being able to stably maintain the zero gravity or low gravity state of the internal module accommodated in the external module for as long as possible by controlling the movement of the external module and controlling the relative position of the internal module even in an environment where the external module is decelerated due to air resistance.

In addition, according to the effective gravity control device of the present disclosure, there is an advantage in that the internal module containing the object is doubly protected by the external module, and is designed with a dual module structure that blocks various types of external noise transmitted through air resistance or ropes around the module, so that a more stable gravity change experiment can be performed.

In addition, according to the gravity change device of the present disclosure, the stability of experiments performed in non-visible areas is greatly improved by including various sensor means, and the accuracy and precision of experiments according to the device of the present disclosure can be greatly improved by applying a feedback control method based on data acquired from sensors.

### BRIEF DESCRIPTION OF THE DRAWINGS

FIG. 1 illustrates the overall configuration of an effective gravity control device of the present disclosure.
FIG. 2 illustrates a schematic block diagram of the effective gravity control device of the present disclosure.
FIG. 3 illustrates the structure of a dual module included in the effective gravity control device of the present disclosure.
FIG. 4 illustrates another embodiment of the dual module included in the effective gravity control device of the present disclosure.
FIG. 5 illustrates the structure of an internal module included in the dual module.
FIG. 6 illustrates a cross-section of the dual module included in the effective gravity control device of the present disclosure.
FIG. 7 illustrates a graph of a relative velocity of the internal module and the external module over time when the effective gravity control device of the present disclosure implements zero gravity or microgravity.
FIG. 8 illustrates a graph of a relative velocity of the internal module and the external module over time when the effective gravity control device of the present disclosure implements the zero gravity or microgravity.
FIG. 9 schematically illustrates the movement states of the internal module and the external module observed from the outside when the effective gravity control device of the present disclosure implements the zero gravity or microgravity.
FIG. 10 illustrates a graph of a relative velocity of the internal module and the external module over time when the effective gravity control device of the present disclosure implements low gravity.
FIG. 11 schematically illustrates a first embodiment in which the effective gravity control device of the present disclosure is installed inside a building.
FIG. 12 illustrates a state where the effective gravity control device according to the first embodiment is installed in a control section.
FIG. 13 illustrates a state where the effective gravity control device according to the first embodiment is installed in an experiment section and a shock absorbing section.
FIG. 14 schematically illustrates a second embodiment in which the effective gravity control device of the present disclosure is installed inside a building.
FIG. 15 illustrates a state where the effective gravity control device according to the first embodiment is installed in a control section.
FIG. 16 illustrates a state where the effective gravity control device according to the first embodiment is installed in an experiment section and a shock absorbing section.
FIG. 17 schematically illustrates a third embodiment in which the effective gravity control device of the present disclosure is installed inside a building.
FIG. 18 illustrates a state where the effective gravity control device according to the third embodiment is installed in a control section.
FIG. 19 illustrates a state where the effective gravity control device according to the third embodiment is installed in an experiment section and a shock absorbing section.
FIG. 20 illustrates a motor included in the effective gravity control device of the present disclosure.
FIG. 21 illustrates a pulley included in the effective gravity control device of the present disclosure.
FIG. 22 illustrates a sliding frame included in the effective gravity control device of the present disclosure.

### BEST MODE FOR CARRYING OUT THE INVENTION

The advantages and features of the present disclosure, and the methods for achieving them, will become clear with reference to the embodiments described in detail below together with the accompanying drawings. However, the present disclosure is not limited to the embodiments disclosed below, but may be implemented in various different forms, and these embodiments are provided only to make the disclosure of the present disclosure complete and to fully inform a person having ordinary skill in the art to which the present disclosure belongs of the scope of the disclosure, and the present disclosure is defined only by the scope of the claims.

Although the terms first, second, or the like are used to describe various components, it is to be understood that these components are not limited by these terms. These terms are merely used to distinguish one component from another. Accordingly, it is to be understood that the first component referred to below may also be the second component within the technical concept of the present disclosure.

In the examples below, terms such as "include" or "have" mean that a feature or component described in the specification is present, and do not exclude in advance the possibility that one or more other features or components may be added.

In the drawings, the sizes of components may be exaggerated or reduced for convenience of explanation. For example, the sizes and shapes of each component illustrated in the drawings are arbitrarily illustrated for convenience of explanation, and therefore the present disclosure is not necessarily limited to what is shown.

Throughout the specification, identical reference numerals refer to identical components.

The individual features of the various embodiments of the present disclosure may be partially or wholly combined or combined with each other, and as may be fully understood by those skilled in the art, various technical connections and operations are possible, and each embodiment may be implemented independently of each other or may be implemented together in a related relationship.

Hereinafter, an effective gravity control device 1000 of the present disclosure and a control method thereof will be described in detail with reference to the attached drawings.

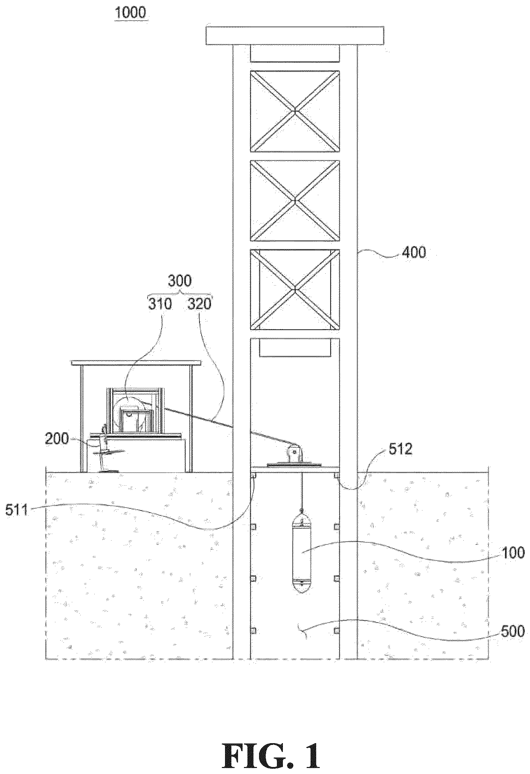

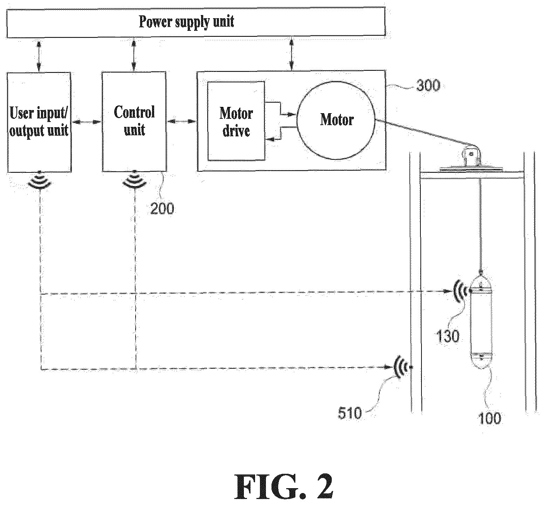

FIG. 1 illustrates the overall configuration of the effective gravity control device 1000 of the present disclosure, and FIG. 2 illustrates a schematic block diagram of the effective gravity control device 1000 of the present disclosure.

Referring to FIG. 1, the effective gravity control device 1000 of the present disclosure is a device that implements a gravity change using a dual module 100. Specifically, the effective gravity control device 1000 of the present disclosure is a device that implements a zero gravity, microgravity, low gravity, or pseudo gravity state of an internal module 120 mounted on a moving external module 110. Hereinafter, the term "gravity change" means encompassing all of the zero gravity, microgravity, low gravity, or pseudo gravity states.

The effective gravity control device 1000 of the present disclosure includes a dual module 100, a control unit 200, an actuator 300, and a support 400. In addition, the effective gravity control device 1000 of the present disclosure may additionally include a user input/output unit and a power supply unit as illustrated in FIG.2.

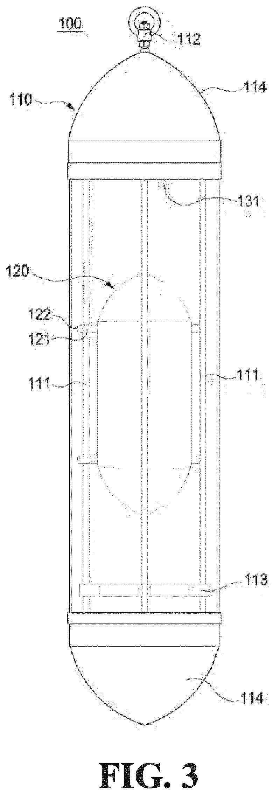

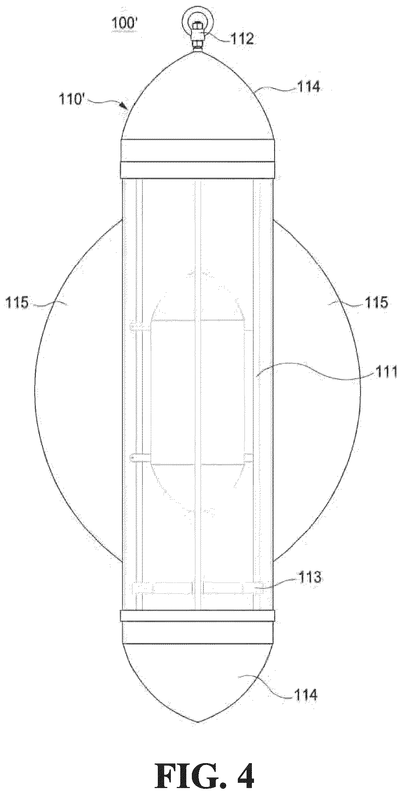

The dual module 100 is a module that implements gravity change. The structure of the dual module 100 will be specifically described with reference to FIGS. 3 and 4 below.

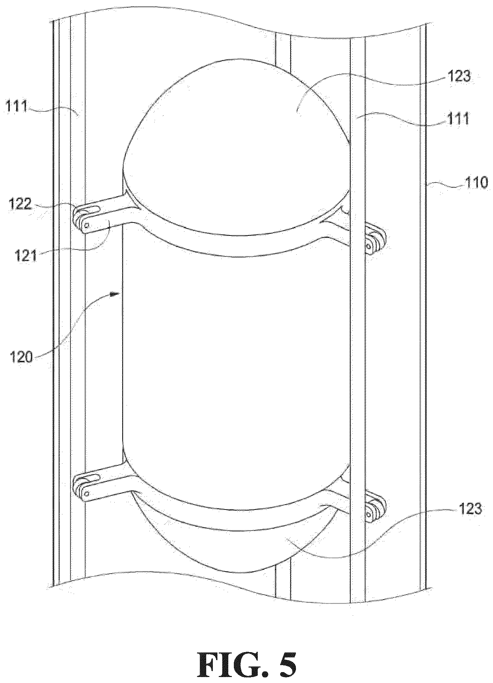

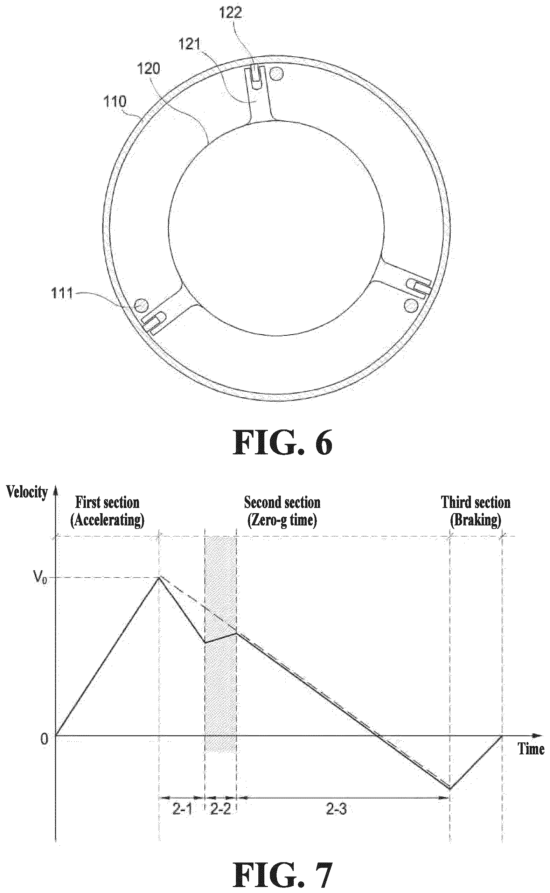

FIG. 3 illustrates the structure of the dual module 100 included in the effective gravity control device 1000 of the present disclosure, FIG. 4 illustrates another embodiment of a dual module 100' included in the effective gravity control device 1000 of the present disclosure, FIG. 5 illustrates the structure of the internal module 120 included in the dual module 100, and FIG. 6 illustrates a cross-section of the dual module 100 included in the effective gravity control device 1000 of the present disclosure.

Referring to FIG. 3, the dual module 100 includes the external module 110 and the internal module 120 mounted inside the external module 110.

The external module 110 has a movement space for the internal module 120 provided therein. The external module 110 is a module whose movement is controlled by the actuator 300. At least one physical quantity related to the movement of the external module 110 is controlled by the actuator 300. Here, the physical quantity related to the movement of the external module 110 may be the position or movement velocity of the external module 110. A specific control method in which the external module 110 is controlled by the actuator 300 will be described later with reference to FIGS.7 to 10.

The effective gravity control device 1000 of the present disclosure may include a motor 310 and a rope 320 as an actuator 300 that are connected to the external module 110 and move the external module 110. Hereinafter, the actuator 300 will be described based on the motor 310 and the rope 320.

The external module 110 includes a supporting member 111.

The supporting member 111 defines a movement space, which is a movement space of the internal module 120, inside the external module 110 and supports the shape of the external module 110.

The supporting member 111 is a bar-shaped member disposed along a length direction of the external module 110. The supporting member 111 is a bar-shaped member connecting the upper and lower portions of the external module 110.

Here, the load on the lower portion of the external module 110 may be greater than that on the upper portion of the external module 110. When the external module 110 falls in the falling space 500, the upper and lower portions of the external module 110 may inappropriately move, such as being reversed or rotated, due to air resistance applied to the external module 110. In order to prevent such a problem, it is desirable that the load on the lower portion of the external module 110 be greater than that on the upper portion of the external module 110, and it is desirable that the supporting member 111 withstands the load on the lower portion of the external module 110 and is connected to the upper portion.

The external module 110 includes a connection member 112 to which the rope 320 is connected to at least one side.

The external module 110 receives an external force from the actuator 300 through a connection member 112. The connection member 112 may be installed in the central portion of the upper end portion of the external module 110. The connection member 112 may be formed in a ring shape so that the rope 320 may be connected.

The connection member 112 may include a bearing therein. The connection member 112 may include a bearing member that functions to prevent rotation or twisting of the rope 320 from being transmitted to the external module 110, or to prevent rotation of the external module 110 from being transmitted to the rope 320. In other words, the connection member 112 may include a member such as a bearing that prevents inappropriate movement of the rope 320 or the external module 110 from affecting each other.

The external module 110 may include a shock absorbing member 113.

The shock absorbing member 113 is provided in at least at one end portion inside the external module 110 and absorbs shock resulting from the movement of the internal module 120. Specifically, the shock absorbing member 113 is configured to reduce the impact of the internal module 120 on the external module 110 when the internal module 120 moves upward or downward within the movement space of the external module 110.

The shock absorbing member 113 may be utilized as a configuration that connects a plurality of supporting members 111, and may have a ring shape. For example, an inner cap member 123 described later may be in contact with the ring-shaped shock absorbing member 113, thereby reducing the impact of the internal module 120 on the external module 110. It is desirable that the shock absorbing member 113 or the inner cap member 123 be formed of an elastic material.

Meanwhile, in FIG. 3, the shock absorbing member 113 is illustrated as being installed only on the lower side of the external module 110, but the present disclosure is not limited to this, and the shock absorbing member 113 may of course be installed on the upper side of the external module 110.

The external module 110 may include an external cap member 114.

The external cap member 114 is provided in at least one end portion of the outer side of the external module 110 and reduces air resistance according to the movement of the external module 110. Specifically, the external cap members 114 are formed at both end portions of the external module 110 and are configured to minimize air resistance acting on the external module 110 when the external module 110 moves up or down. The above-described connection member 112 may be formed at the end portion of the external cap member 114.

Meanwhile, in order to prevent inappropriate movement, such as the upper and lower portions of the external module 110 being reversed or rotated, when the external module 110 falls in the falling space 500, an object that applies a load may be accommodated in the external cap member 114 provided at the lower end portion of the external module 110. For example, the object that applies the load may be a structure, such as a battery, mounted on the dual module 100.

The external module 110 may include a position detection sensor 131 that detects the position of the internal module 120.

The position detection sensor 131 is provided on at least one inner end portion of the external module 110 and is a means for detecting the position of the internal module 120 within the movement space. Here, the position detection sensor 131 may be a LiDAR sensor that measures the position coordinates of the reflector, that is, the internal module 120, by shooting a laser pulse and measuring the time it takes for the laser pulse to be reflected and returned. In FIG. 3, the position detection sensor 131 is illustrated as being installed on the upper side of the external module 110, but it is not limited thereto, and the position detection sensor 131 may of course be installed on the lower side of the external module 110.

Referring to FIG. 4, which illustrates a dual module 100' according to another embodiment, the dual module 100' includes an external module 110' and an internal module 120 mounted inside the external module 110.

The external module 110' may further include a wing member 115 compared to the external module 110 described above.

The wing member 115 may prevent inappropriate movement, such as the upper and lower portions of the external module 110 being reversed or rotated, from occurring when the external module 110 falls in the falling space 500.

The wing member 115 may be formed on each of both sides of the external module 110, or three or more may be formed so that the space between the wing members 115 has a preset angle range. The wing members 115 may have a curved shape as illustrated in FIG. 4, or may be formed to have various wing shapes.

The dual module 100 includes the internal module 120 mounted inside the external module 110.

The internal module 120 is a module that moves independently from the external module 110 within the movement space of the external module 110 by an external force transmitted through the external module 110.

The internal module 120 is provided with an internal space for transporting an object. Here, the object may be a subject for conducting an experiment through a change in gravity, and the subject may include various types. For example, the internal module 120 may accommodate subjects ranging from cell units to subjects corresponding to animals or humans.

The internal module 120 includes a plurality of protruding members 121 extending toward the inner wall of the external module 110.

As illustrated in FIG. 6, the protruding member 121 may limit the internal module 120 from rotating more than a threshold value within the movement space of the external module 110 together with the supporting member 111 of the external module 110. Even when the internal module 120 rotates within the movement space, the protruding member 121 may not go beyond the position where the supporting member 111 is installed, thereby limiting the internal module 120 from rotating more than a predetermined angle.

The internal module 120 includes a roller 122 provided at the end portion of each protruding member 121.

The roller 122 is configured to reduce friction due to contact between the external module 110 and the internal module 120. The roller 122 is positioned so as to extend from the internal module 120 and touch the inner wall of the external module 110. When the internal module 120 touches the external module 110 during movement, the roller 122 may minimize the action of unnecessary external forces such as frictional forces acting on the internal module 120. It is desirable for the internal module 120 to move smoothly along the inner wall of the external module 110.

In explaining the present disclosure, the roller 122 is exemplified, but it is obvious that various means other than the roller 122 may be applied as long as the friction between the internal module 120 and the external module 110 may be reduced. For example, the roller 122 may be a roller bearing member that performs one-dimensional linear movement as illustrated in FIGS. 5 and 6, or may be a ball bearing member that performs multi-angle rotational movement.

Meanwhile, the support 400 is a device that provides the falling space 500 in which the dual module 100 moves. The support 400 may be installed on the ground or a building to form the falling space 500 in which the dual module 100 moves.

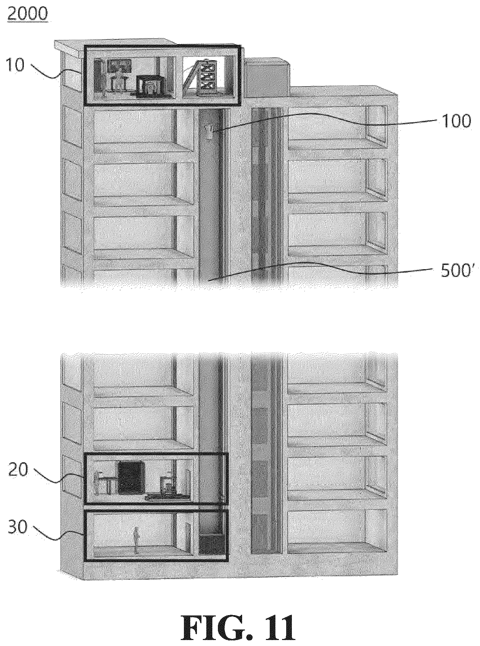

As illustrated in FIG. 1, the support 400 may be a structure extending upward and downward from a reference plane. FIG. 1 illustrates an example in which the support 400 extends underground based on the ground to form a vertical space in which the dual module 100 moves, and extends above ground to provide an installation space for the effective gravity control device 1000. Alternatively, the falling space 500 in which the dual module 100 of the present disclosure moves may be a space parallel to the vertical space within the building, or a space sharing the vertical space. Such an embodiment will be described in detail later with reference to FIGS. 11 to 22 below.

Various sensor units 510 for monitoring the movement of the dual module 100 in the falling space 500 may be placed.

The sensor unit 510 includes a position detection sensor 511 that detects the movement or position of the dual module 100, particularly the external module 110. In addition, the sensor unit 510 may include a camera 512 that obtains an image that monitors the movement or position of the external module 110. The sensor unit 510 installed in the falling space 500 may include various sensors such as an infrared sensor, a temperature sensor, as well as the position detection sensor 131 and the camera 512.

Hereinafter, with reference to FIGS. 7 to 10, a control method for implementing a change in gravity by the effective gravity control device 1000 of the present disclosure will be specifically described. The description will be made with reference to FIGS. 1 to 6 described above.

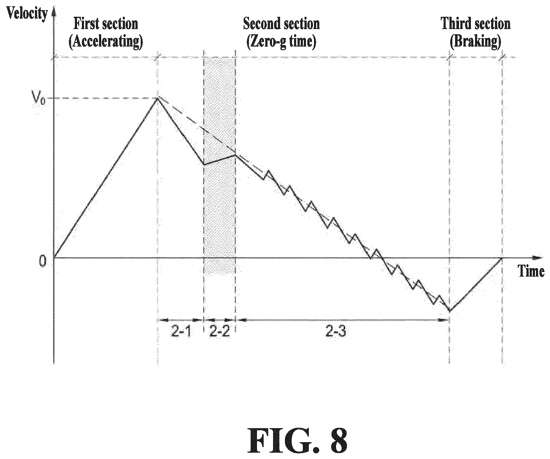

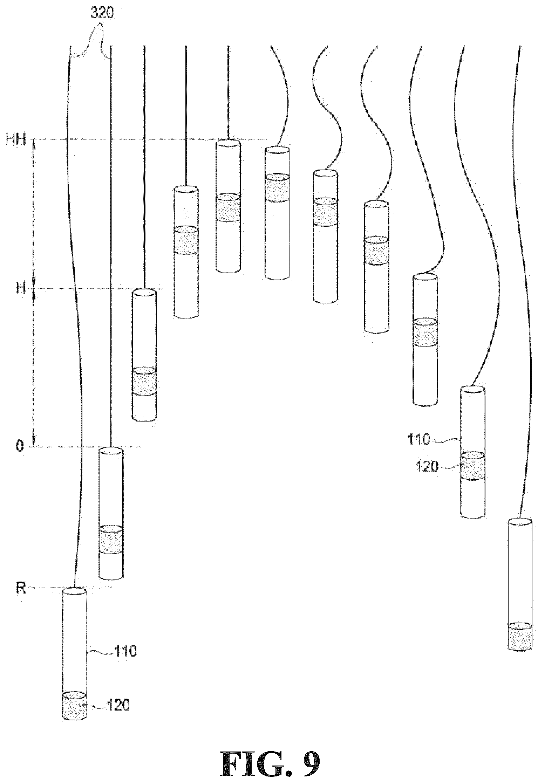

FIG. 7 and FIG. 8 illustrate graphs of relative velocities over time of the external module 110 and the internal module 120 when the effective gravity control device 1000 of the present disclosure implements zero gravity or microgravity, and FIG. 9 schematically illustrates the movement states of an external module 110 and an internal module 120 observed from the outside when the effective gravity control device 1000 of the present disclosure implements zero gravity or microgravity.

The control unit 200 generates a control signal for the actuator 300 that controls the movement of the external module 110. The control unit 200 generates a control signal that controls at least one physical quantity related to the movement of the external module 110.

The control unit 200 may receive data about the external module 110 and the internal module 120 from the sensor unit 130 and 510 described above, and generate the control signal for controlling the movement of the external module 110 based on the received data. The control unit 200 may receive data about the positions of the external module 110 and the internal module 120 from the position detection sensor 131 and 511 and the camera 512, and generate the control signal for controlling the movement of the external module 110 based on the received position data of the external module 110 and the internal module 120.

Meanwhile, the control unit 200 may receive data on the status of the dual module 100 through the sensor unit 130 mounted on the dual module 100 and the sensor unit 510 installed in the falling space 500 in addition to the position detection sensor 131. For example, when the control unit 200 determines that an event such as device overheating, abnormal movement detection, or impact detection has occurred through the sensor unit 130 and 510, the control unit may generate a control signal such as emergency braking.

The actuator 300 moves the external module 110 so that the external module 110 has at least one physical quantity according to the control signal received from the control unit 200. The actuator 300 may include the motor 310, a motor drive for controlling the motor, and the rope 320 connected to the motor 310.

Meanwhile, in explaining the effective gravity control device 1000 of the present disclosure, the actuator 300 is explained as the motor 310 and the rope 320, but the scope of the present disclosure is not limited thereto, and it goes without saying that a pneumatic actuator, a hydraulic actuator, a rail structure, a magnetic levitation method, or the like may be applied as the actuator 300.

The physical quantity related to the movement of the external module 110 may be the velocity of the external module 110, the position of the external module 110, the relative position of the external module 110 and the internal module 120, or the relative velocity of the external module 110 and the internal module 120. FIG. 7, FIG. 8, and FIG. 10 describe the movement state of the dual module 100 of the present disclosure from the viewpoint that the relative velocity of the external module 110 and the internal module 120 is controlled, and FIG. 9 describes the movement state of the dual module 100 of the present disclosure from the viewpoint that the relative position of the external module 110 and the internal module 120 is controlled.

In the present disclosure, the control unit 200 generates a control signal that controls the gravity of the dual module 100 by starting from the bottom portion of the falling space 500 formed by the support 400 as illustrated in FIG. 9 and rising from the bottom portion. The control unit 200 applies tension to the rope 320 connected to the upper side of the external module 110 so that the external module 110 and the internal module 120 rise vertically upward from the bottom portion, which is the starting point.

Referring to FIGS. 7 and 8, the control unit 200 may generate control signals to accelerate (corresponding to the first section), induce a change in gravity (corresponding to the second section), and brake (corresponding to the third section) the dual module 100. Specifically, the control unit 200 generates a first control signal in the first section in which the dual module 100 accelerates. The control unit 200 generates a second control signal in the second section in which a change in gravity, for example, zero gravity (Zero-g) or microgravity, is applied to the internal module 120 of the dual module 100. In addition, the control unit 200 generates a third control signal in the third section in which the dual module 100 is braked.

Below, a method for controlling the movement of the external module 110 and the internal module 120 in the first section is described.

The control unit 200 generates the first control signal that controls the actuator 300 to apply an external force to the internal module 120 through the external module 110 in the first section.

The first control signal is a control signal that pulls the rope 320 connected to the external module 110 with the power or torque of the motor. By this first control signal, in the first section, which is the acceleration section, the external module 110 and the internal module 120 perform the movement that rises from the bottom portion as one unit.

In the first section, as illustrated in FIGS. 7 and 8, the velocity (illustrated by a solid line) of the external module 110 and the velocity (illustrated by a dotted line) of the internal module 120 may be accelerated at the same velocity. In the first section, the external module 110 and the internal module 120 perform a movement to increase to a preset velocity V₀ by the actuator 300. In the first section, the relative velocity of the internal module 120 and the external module 110 may be less than a first critical velocity, and here, the first critical velocity may correspond substantially to 0. In other words, the relative velocity of the internal module 120 and the external module 110 may be 0 in the first section.

In the first section, as illustrated in FIG. 9, the external module 110 and the internal module 120 perform an upward movement from the bottom portion (not illustrated) to a point 'R'. At this time, the internal module 120 is positioned in a state of being seating on the lower side of the external module 110, and the internal module 120 performs an upward movement together with the external module 110 by the external force applied through the external module 110. In the first section, the relative position of the internal module 120 and the external module 110 may be less than a first critical position, and here, the first critical position may correspond substantially to 0. In other words, the relative position of the internal module 120 and the external module 110 in the first section may be 0.

Below, a method for controlling the movement of the external module 110 and the internal module 120 in the second section is described.

First, the second control signal in the second section is a combination of various control signals that induce effective gravity changes in the internal module 120 mounted within the external module 110.

The second section, which is the effective gravity control section, may include a second-first section in which the internal module 120 is separated from the external module 110, a second-second section in which the velocity or position of the external module 110 is corrected based on the position data of the internal module 120, and a second-third section in which the external module 110 follows the velocity or position of the internal module 120.

First, the method for controlling the movement of the external module 110 and the internal module 120 in the second-first section is described.

The control unit 200 generates a second-first control signal to separate the internal module 120 from the external module 110. The control unit 200 generates a signal to cause the internal module 120 to initiate movement independent of the external module 110 in the second-first section, which is the moment when the internal module 120 enters the second section from the first section.

The second-first control signal is a motor control signal for separating the internal module 120 from the external module 110. The second-first control signal may be a signal for releasing an external force applied to the internal module 120 through the external module 110 at the moment when the dual module 100 reaches a preset velocity or at the moment when the dual module 100 reaches a preset position. In other words, the second-first control signal may be a signal for temporarily releasing the force or torque of the motor 310 on the rope 320 connected to the external module 110 at the moment when the dual module 100 reaches a preset velocity or at the moment when the dual module 100 reaches a preset position.

In the second-first section, as illustrated in FIGS. 7 and 8, the difference between the velocity (illustrated by a solid line) of the external module 110 and the velocity (illustrated by a dotted line) of the internal module 120 gradually increases. Due to external forces such as air resistance applied to the external module 110, the velocity of the external module 110 decelerates more rapidly than the velocity of the internal module 120. The difference between the velocity of the external module 110 and the velocity of the internal module 120 gradually increases. The movement in the second-first section is maintained until the relative velocitys of the internal module 120 and the external module 110 reach the preset second critical velocity. The movement in the second-first section is maintained until the velocity difference between the internal module 120 and the external module 110 reaches the preset second critical velocity. Here, the second critical velocity may correspond to the difference value between the dotted line and the solid line at the boundary between the second-first section and the second-second section.

The point of entry into the second-first section is indicated as the point 'R' in FIG. 9. At this time, the internal module 120 seating on the lower side of the external module 110 moves upward independently from the external module 110. At the moment of entering the second section after the first section, the separation of the internal module 120 from the external module 110 begins.

In the second-first section, the internal module 120 performs a vertical upward movement within the external module 110 due to inertia according to the external force transmitted from the external module 110. The second-first section corresponds to the section in which the external module 110 rises from the point 'R' to a point '0' in FIG. 9. In the second-first section, the positions of the external module 110 and the internal module 120 gradually become different. Due to external forces such as air resistance applied to the external module 110, the ascending velocity of the external module 110 is decelerated more rapidly than the ascending velocity of the internal module 120. The difference between the positions of the external module 110 and the internal module 120 gradually increases. The movement in the second-first section is maintained until the relative positions of the internal module 120 and the external module 110 reach a preset second critical position. Here, the second critical position may be the distance from the bottom portion of the external module 110 to the bottom portion of the internal module 120, or may be the distance from the top of the external module 110 to the top of the internal module 120.

In the second-first section, the external module 110 decelerates with respect to the ground. At this time, the force applied to the external module 110 may be a force that is the sum of gravity and air resistance. The internal module 120 may perform an ideal parabolic movement with respect to the ground. The ideal parabolic movement may be a parabolic movement in a vacuum or a movement close thereto. At this time, the force applied to the internal module 120 is desirably gravity. It is desirable that the slope of the velocity graph (illustrated by a dotted line) of the internal module 120 has a slope value corresponding to the acceleration of gravity. However, the case where there is a slight air resistance, or the like applied to the internal module 120 is not excluded from the scope of the present disclosure.

Next, the method for controlling the movement of the external module 110 and the internal module 120 in the second-second section is described.

The control unit 200 generates a second-second control signal for correcting the velocity or position of the external module 110. The control unit 200 generates a signal for correcting the position of the external module 110 based on the position data of the internal module 120 in the second-second section following the second-first section.

The second-second control signal is a motor control signal for causing the external module 110 to follow the movement of the internal module 120. The second-second control signal may be a signal for applying a large tension of the rope 320 to the external module 110. In other words, the second-second control signal may be a signal for temporarily applying a large force or torque of the motor 310 to the rope 320 connected to the external module 110 at the moment when the velocity difference between the internal module 120 and the external module 110 reaches a preset second critical velocity or when the position difference between the internal module 120 and the external module 110 reaches a preset second critical position.

In the second-second section, as illustrated in FIGS. 7 and 8, the difference between the velocity (illustrated by a solid line) of the external module 110 and the velocity (illustrated by a dotted line) of the internal module 120 gradually decreases. In order to compensate for an external force such as air resistance applied to the external module 110, when tension is momentarily applied to the external module 110, the velocity of the external module 110 temporarily accelerates. At this time, the difference between the velocity of the external module 110 and the velocity of the internal module 120 gradually decreases. The movement in the second-second section is maintained until the relative velocity of the internal module 120 and the external module 110 reaches 0 (zero) or until the relative velocity of the internal module 120 and the external module 110 reaches a preset third critical velocity. Here, the third critical velocity may correspond to the difference value between the dotted line and the solid line at the boundary between the second-second section and the second-third section.

In the second-second section, the external module 110 performs an upward movement with a greater upward movement than the internal module 120. In other words, in the second-second section, the external module 110 performs the movement to catch up with the internal module 120. The second-second section corresponds to the section in which the external module 110 rises from the point '0' to a point 'H' in FIG. 9. The second-second section is a section in which the tension of the rope 320 applied to the external module 110 is maintained. In the second-second section, the difference between the position of the external module 110 and the position of the internal module 120 may gradually decrease. Due to the tension that overcomes the air resistance applied to the external module 110, the ascending velocity of the external module 110 accelerates faster than the ascending velocity of the internal module 120. The movement in the second-second section is maintained until the relative positions of the internal module 120 and the external module 110 reach a preset third critical position. Here, the third critical position may be the distance from the bottom portion of the external module 110 to the bottom portion of the internal module 120, or may be the distance from the top of the external module 110 to the top of the internal module 120.

Next, the method for controlling the movement of the external module 110 and the internal module 120 in the second-third section is described.

The control unit 200 generates a second-third control signal for the external module 110 to follow the velocity or position of the internal module 120. The control unit 200 generates a feedback control signal for the external module 110 to follow the position of the internal module 110 based on the position data of the internal module 120 in the second-third section following the second-second section.

The second-third control signal is a motor control signal for causing the external module 110 to follow the movement of the internal module 120. The second-third control signal may be a signal for feedback controlling the tension of the rope 320 applied to the external module 110 based on the position or velocity of the internal module 120. In other words, the second-third control signal may be a feedback control signal for causing the external module 110 to follow the position of the internal module 120 at the moment when the velocity difference between the internal module 120 and the external module 110 reaches the preset third critical velocity or at the moment when the position difference between the internal module 120 and the external module 110 reaches the preset third critical position.

In the second-third section, as illustrated in FIGS. 7 and 8, the velocity (illustrated by a solid line) of the external module 110 and (illustrated by a dotted line) the velocity of the internal module 120 may be substantially the same. When a tension that compensates for an external force such as air resistance applied to the external module 110 is applied, the velocity of the external module 110 may have a velocity similar to the state of the internal module 120 that maintains an ideal parabolic movement state.

Here, the velocity (illustrated in a solid line) of the external module 110 and the velocity (illustrated in a dotted line) of the internal module 120 being substantially the same may mean a state in which the relative velocity of the internal module 120 and the external module 110 is substantially zero, as illustrated in FIG. 7. In contrast, the velocity of the external module 110 (illustrated in a solid line) and the velocity of the internal module 120 (illustrated in a dotted line) being substantially the same may mean a state in which the velocity of the external module 110 is continuously adjusted to the velocity of the internal module 120 even when the relative velocity of the internal module 120 and the external module 110 has a slight difference. In other words, the fact that the velocity (illustrated by the solid line) of the external module 110 and the velocity (illustrated by the dotted line) of the internal module 120 are substantially the same includes the state in the second-third section illustrated in FIG. 7 and the state in the second-third section illustrated in FIG. 8.

In the second-third section, movement is maintained until the internal module 120 and the external module 110 are substantially in contact. The movement in the second-third section may be maintained until the inner cap member 123 of the internal module 120 comes close to the shock absorbing member 113 of the external module 110 by a preset distance.

The second-third section corresponds to the section in which the external module 110 rises from the point 'H' to a point 'HH' in FIG. 9 and then descends. The section second-third is a section in which the tension of the rope 320 applied to the external module 110 is maintained for a certain section and then released. It is desirable that the difference between the position of the external module 110 and the position of the internal module 120 in the second-third section be maintained within a preset distance range.

In the second-third section, the movement of the external module 110 following the internal module 120 corresponds to a movement that is at least partially based on an ideal parabolic movement with respect to the ground. This is an ideal parabolic movement in which the internal module 1120 falls due to gravity, while the movement of the external module 110 is a movement implemented by being feedback-controlled by the control unit 200 and the actuator 300.

Therefore, through the control method in the second section of the control unit 200, there is an advantage in that an air time (that is, pure falling time) of the internal module may be increased. Through the control method in the second section of the control unit 200, even in an environment where the external module 110 is decelerated due to air resistance, the ideal parabolic movement state of the internal module 120 accommodated in the external module 110 may be stably maintained for as long as possible through the relative position control of the internal module 120 and the external module 110.

Below, a method for controlling the movement of the external module 110 and the internal module 120 in the third section is described.

The control unit 200 generates a third control signal to brake the external module 110 and the internal module 120 in the third section. The third control signal is a control signal that pulls the rope 320 connected to the external module 110 with the power or torque of the motor. The external module 110 and the internal module 120, accelerating by this third control signal, perform a movement to reduce the velocity as one unit.

In the third section, as illustrated in FIGS. 7 and 8, the velocity (illustrated by a solid line) of the external module 110 and the velocity (illustrated by a dotted line) of the internal module 120 may have the same velocity and may be decelerated. In the third section, the external module 110 and the internal module 120 perform a movement to stop by the actuator 300. At this time, since the external module 110 and the internal module 120 are substantially in contact, the relative velocity of the internal module 120 and the external module 110 in the third section may be 0.

Referring to FIG. 9, the third section may be a movement state (not shown) after the point (the last state illustrated in FIG. 9) where the external module 110 and the internal module 120 meet again.

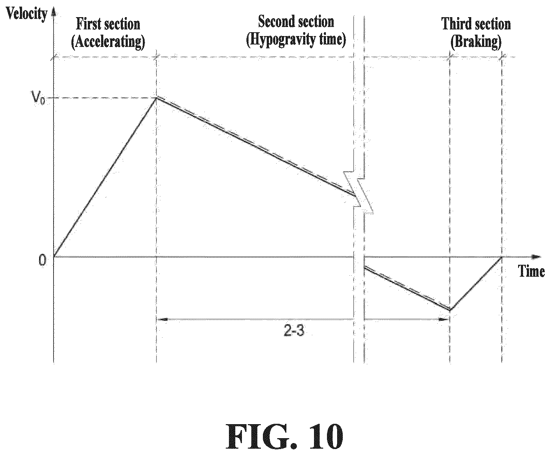

Meanwhile, FIG. 10 illustrates a graph of the relative velocity over time of an external module 110 and an internal module 120 when the effective gravity control device 1000 of the present disclosure implements low gravity (or hypo-gravity).

When a low gravity state is implemented in the internal module 120, the external module 110 and the internal module 120 move while being substantially attached to each other. The internal module 120 is positioned in a state of being seating on the lower side of the external module 110, and the internal module 120 moves upward and downward together with the external module 110 by an external force applied through the external module 110.

Referring to FIG. 10, the control unit 200 may generate control signals to accelerate (corresponding to a first section), induce a change in gravity (corresponding to a second section), and brake (corresponding to a third section) the dual module 100. Specifically, the control unit 200 generates a first control signal in the first section in which the dual module 100 is accelerated. The control unit 200 generates a second control signal in the second section in which low gravity is applied to the internal module 120 of the dual module 100. In addition, the control unit 200 generates a third control signal in the third section in which the dual module 100 is braked.

Here, the first section for accelerating and the third section for braking are substantially the same as those described in FIGS. 7 to 9 for implementing microgravity. However, the movement according to FIG. 10 for implementing low gravity in the second section for inducing the change in gravity is characterized in that it does not include the second-first section in which the internal module 120 is separated from the external module 110 and the second-second section in which the velocity or position of the external module 110 is corrected based on the position data of the internal module 120. The movement according to FIG. 10 for implementing the low gravity is characterized in that it only includes sections similar to the second-third section in which the external module 110 follows the internal module 120 in the second section for inducing the change in gravity.

In most sections where the low gravity is implemented in the internal module 120, the relative velocity of the internal module 120 and the external module 110 may be less than the first critical velocity, where the first critical velocity may correspond substantially to 0. In other words, in most sections where the low gravity is implemented in the internal module 120, the relative velocity of the internal module 120 and the external module 110 may be 0. In addition, in most sections where low gravity is implemented in the internal module 120, the relative position of the internal module 120 and the external module 110 may be less than the first critical position, where the first critical position may correspond substantially to 0. In other words, in most sections where the low gravity is implemented in the internal module 120, the relative position of the internal module 120 and the external module 110 may be 0.

In this case, the control unit 200 may generate a signal for controlling the velocity or position of the external module 110. The second-third control signal for implementing the low gravity is a motor control signal for controlling the velocity or position of the external module 110 to have a preset velocity or position.

There is a difference in that, in implementing the microgravity, the second-third control signal is a feedback control signal that controls the velocity or position of the external module 110 based on the velocity or position data of the internal module 120, whereas, in implementing the low gravity, the second-third control signal is a motor control signal that controls the velocity or position of the external module 110 to have a preset velocity or position.

Hereinafter, various embodiments in which an effective gravity control device 2000 of the present disclosure is installed in a building will be specifically described with reference to FIGS. 11 to 22. The description will be made with reference to FIGS. 1 to 10 described above.

The effective gravity control device 2000 of the present disclosure may be installed in a falling space 500' formed parallel to or sharing a vertical space within a building. Here, the vertical space may be a space in which an elevator moves or may be a long, empty space formed within a building.

The effective gravity control device 2000 of the present disclosure includes a dual module 100, a control unit 200, an actuator 300, and a support 400. The dual module 100, the control unit 200, the actuator 300, and the support 400 are substantially the same as those described above with reference to FIGS. 1 to 10, so that redundant descriptions are omitted, and parts that are different will be specifically described below.

The effective gravity control device 2000 of the present disclosure is installed across a control section 10 which is a space formed on the upper side of the building, an experiment section 20 which is a space formed on the lower side of the building, and a shock absorption section 30 which is a space formed on the bottom portion of the building.

The control section 10 is formed on the upper side of the falling space 500' of the building and refers to a space for controlling and monitoring the change in gravity applied to the dual module. The experiment section 20 is formed on the lower side of the falling space 500' of the building and refers to a space for conducting experiments on objects loaded onto the dual module. The shock absorbing section 30 is formed on the bottom portion of the falling space 500' of the building and refers to a space for absorbing shock applied to the building from the dual module. The control section 10, the experiment section 20, and the shock absorbing section 30 illustrated in FIGS. 11 to 19 are intended to roughly indicate the locations where each component of the effective gravity control device 2000 of the present disclosure is installed, and are not limited to what is illustrated.

Depending on whether the vertical space through which the elevator moves is utilized as the falling space 500', depending on the installation method of the control section 10, or depending on the method of taking the dual module 100 into/out from the falling space 500', the effective gravity control device of the present disclosure may be divided into a first embodiment to a third embodiment. Hereinafter, the first embodiment to the third embodiment will be separately described.

### (1) First embodiment: effective gravity control device installed in vertical space where elevator does not move as falling space

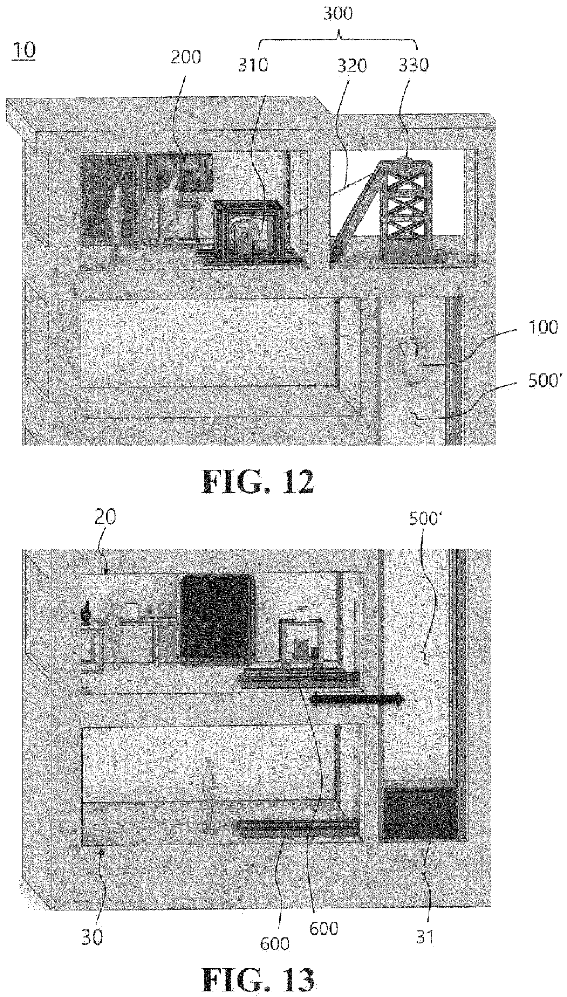

FIG. 11 schematically illustrates a first embodiment in which the effective gravity control device of the present disclosure is installed in the building, FIG. 12 illustrates a control section of the effective gravity control device according to the first embodiment, and FIG. 13 illustrates an experiment section and a shock absorbing section of the effective gravity control device according to the first embodiment.

According to the first embodiment, the effective gravity control device 2000 of the present disclosure utilizes a separate vertical space parallel to the vertical space in which the elevator is operated. For example, there is a separate vertical space on one side in which the elevator is operated, and it is desirable that the elevator is removed or not installed within the falling space 500' to which the effective gravity control device 2000 of the present disclosure is applied.

The control section 10 is formed on the upper side of the falling space 500' of the building. The effective gravity control device 2000 according to the first embodiment includes the control unit 200 and the actuator 300 in the space of the upper control section 10.

The control unit 200 generates the control signal of the actuator 300 that controls the movement of the external module 110. The control unit 200 generates the control signal that controls at least one physical quantity related to the movement of the external module 110. The effective gravity control device 2000 of the present disclosure may include an actuator 300 that is connected to the external module 110 and includes a motor 310, a rope 320, and a pulley 330 that move the external module 110. The configuration of the control unit 200 and the actuator 300 is the same as the control unit 200 and the actuator 300 of the effective gravity control device 1000 described with reference to FIGS. 1 to 10 described above.

The experiment section 20 is formed on the lower side of the falling space 500' of the building. The effective gravity control device 2000 includes a sliding frame 600 that provides a path so that the dual module 100 may be taken into or taken out from the falling space 500' in the space of the experiment section 20 at the lower side. According to the first embodiment, the sliding frame 600 may take necessary devices into or out from the falling space 500' through an opening formed by penetrating one side wall of the building.

By using this sliding frame 600, a user may move into the falling space 500' and perform actions such as replacing the dual module 100 moving vertically within the falling space 500' or taking the object mounted on the dual module 100 into/out from the module section.

The shock absorbing section 30 is formed at the bottom of the falling space 500' of the building. The effective gravity control device 2000 includes a shock absorber 31 that absorbs shock applied to the building from the dual module 100 in the space of the shock absorbing section 30. The shock absorber 31 may be installed at the bottom portion of the falling space 500'.

### (2) Second embodiment: effective gravity control device installed in space where elevator moves as falling space

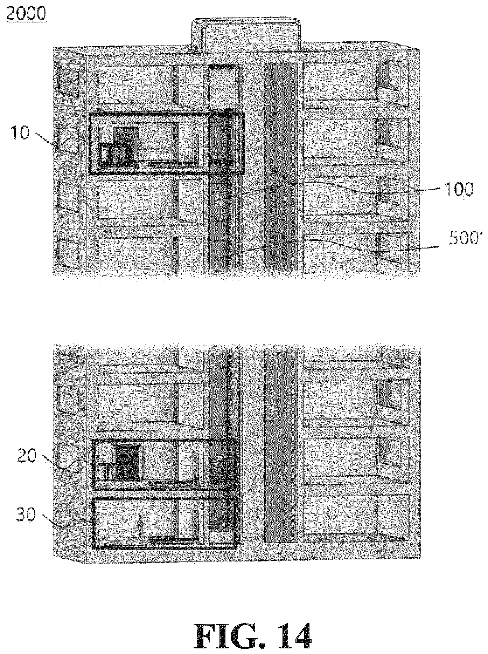

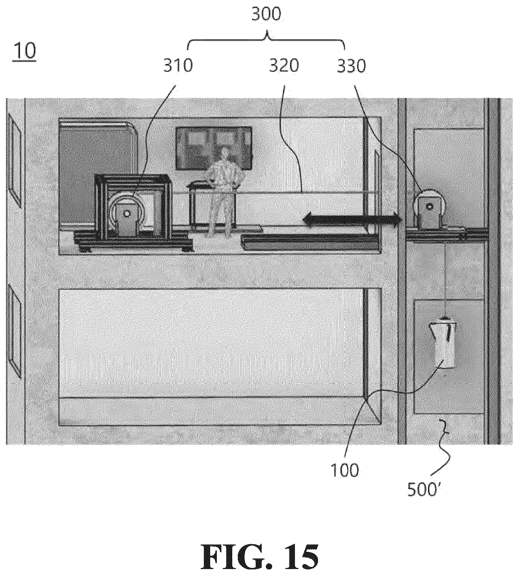

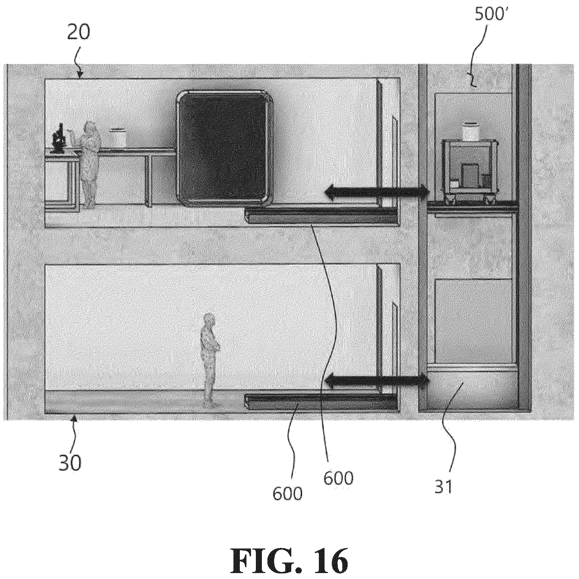

FIG. 14 schematically illustrates where a second embodiment of an effective gravity control device of the present disclosure is installed in a building, FIG. 15 illustrates a control section of the effective gravity control device according to the second embodiment, and FIG. 16 illustrates an experiment section and a shock absorbing section of the effective gravity control device according to the second embodiment.

According to the second embodiment, the effective gravity control device 2000 of the present disclosure utilizes the vertical space in which the elevator operates as the falling space 500'. The second embodiment may present a structure of the effective gravity control device 2000 that utilizes the vertical space in which the elevator moves but does not interfere with the operation of the elevator. At this time, it is desirable to place the elevator module at the uppermost side of the vertical space of the building while the effective gravity control device 2000 of the present disclosure operates.

The control section 10 is formed on the upper side of the falling space 500' of the building. At this time, the control section 10 is formed on the upper side of the falling space 500' of the building, but it is desirable that the control section is formed on the lower side of the space where the elevator that is not in operation is installed. In addition, in the second embodiment, as illustrated, it is desirable that an opening is formed through one side wall of the building so that the space where the control section 10 and the experiment section 20 are formed and the vertical space where the elevator moves may be connected.

The effective gravity control device 2000 according to the second embodiment includes the control unit 200 and the actuator 300 in the space of the control section 10 on the upper side.

The control unit 200 generates a control signal of an actuator 300 that controls the movement of the external module 110. The control unit 200 generates a control signal that controls at least one physical quantity related to the movement of the external module 110. The effective gravity control device 2000 of the present disclosure may include an actuator 300 that is connected to the external module 110 and includes a motor 310, a rope 320, and a pulley 330 that move the external module 110. The configuration of the control unit 200 and the actuator 300 is the same as the control unit 200 and the actuator 300 of the effective gravity control device 1000 described with reference to FIGS. 1 to 10 described above.

In addition, the effective gravity control device 2000 according to the second embodiment may include a sliding frame 600 that provides a path so that the dual module 100 in the space of the control section 10 on the upper side may be taken into or out from the falling space 500'.

The experiment section 20 is formed on the lower side of the falling space 500' of the building. The effective gravity control device 2000 includes a sliding frame 600 that provides a path so that the dual module 100 in the space of the experiment section 20 on the lower side may be taken into or out from the falling space 500'. According to the first embodiment, the sliding frame 600 may take necessary devices into or out from the falling space 500' through an opening formed by penetrating one side wall of the building.

By using this sliding frame 600, the user may move into the falling space 500' and perform actions such as replacing the dual module 100 moving vertically within the falling space 500' or taking the object mounted on the dual module 100 into/out from the module section.

The shock absorbing section 30 is formed at the bottom portion of the falling space 500' of the building. The effective gravity control device 2000 includes a shock absorber 31 that absorbs shock applied to the building from the dual module 100 in the space of the shock absorbing section 30. The shock absorber 31 may be installed at the bottom portion of the falling space 500'.

### (3) Third embodiment: modified embodiment of effective gravity control device installed with space where elevator moves as falling space

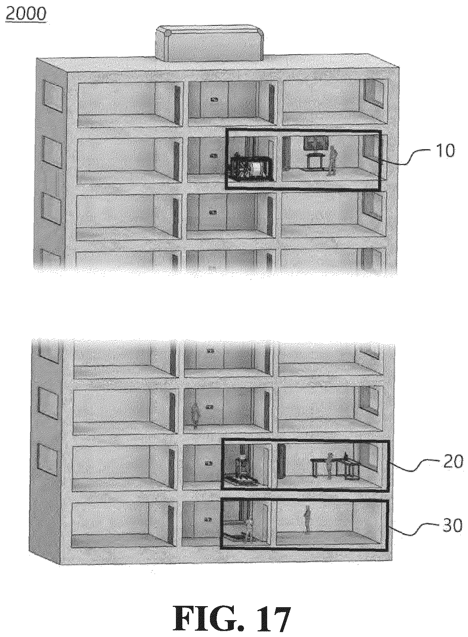

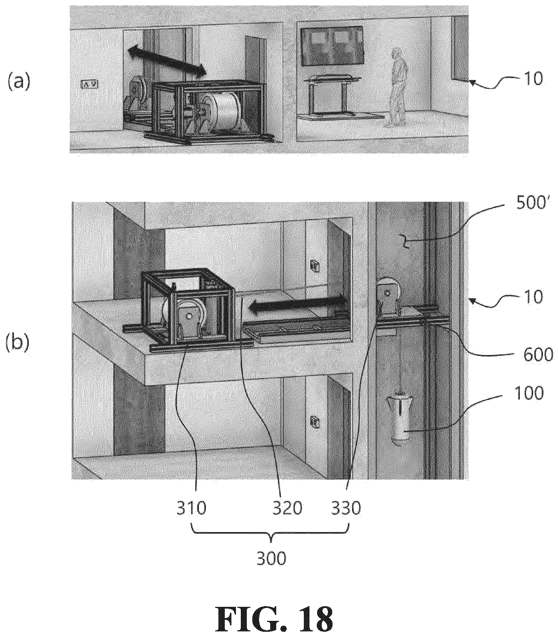

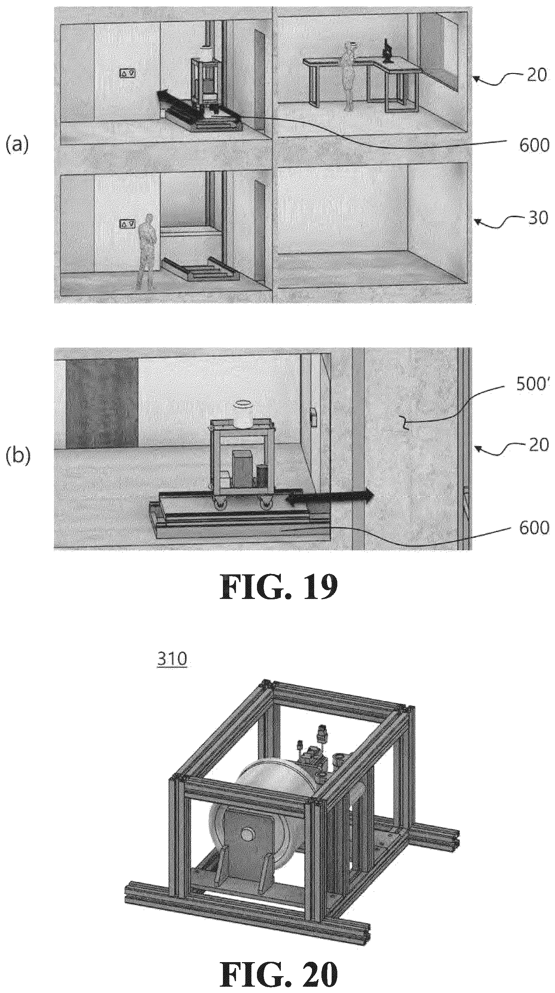

FIG. 17 schematically illustrates the state of a third embodiment in which the effective gravity control device of the present disclosure is installed in a building, FIG. 18 illustrates a state where the effective gravity control device according to the third embodiment is installed in a control section, and FIG. 19 illustrates a state where the effective gravity control device according to the third embodiment is installed in an experiment section and a shock absorbing section.

According to the third embodiment, the effective gravity control device 2000 of the present disclosure utilizes the vertical space in which the elevator operates as the falling space 500'. The second embodiment may suggest a structure of the effective gravity control device 2000 that utilizes the vertical space in which the elevator moves but does not interfere with the operation of the elevator. The third embodiment may suggest a structure that utilizes the vertical space in which the elevator moves but does not interfere with the operation of the elevator, like the second embodiment. However, unlike the second embodiment described above, the third embodiment has an advantage in that the gravity change system of the present disclosure may be installed without having to form a separate opening in the wall of the building by allowing devices necessary for the system to be taken into/out through an elevator opening/closing door already formed in the building.

The control section 10 is formed on the upper side of the falling space 500' of the building. At this time, the control section 10 is formed on the upper side of the falling space 500' of the building, but it is desirable to form the control section on the lower side of the space where an elevator that is not in operation is placed.

The effective gravity control device 2000 according to the third embodiment includes a control unit 200 and an actuator 300 in the space of the control section 10 on the upper side.

The control unit 200 generates a control signal of the actuator 300 that controls the movement of the external module 110. The control unit 200 generates a control signal that controls at least one physical quantity related to the movement of the external module 110. The effective gravity control device 2000 of the present disclosure may include an actuator 300 that is connected to the external module 110 and includes a motor 310, a rope 320, and a pulley 330 that move the external module 110. The configuration of the control unit 200 and the actuator 300 is the same as the control unit 200 and the actuator 300 of the effective gravity control device 1000 described with reference to FIGS. 1 to 10 described above.

In addition, the effective gravity control device 2000 according to the third embodiment may include a sliding frame 600 that provides a path so that the dual module 100 in the space of the control section 10 on the upper side is taken into or out from the falling space 500'.

The experiment section 20 is formed on the lower side of the falling space 500' of the building. The effective gravity control device 2000 includes the sliding frame 600 that provides the path so that the dual module 100 in the space of the experiment section 20 on the lower side may be taken into or out from the falling space 500'. According to the first embodiment, the sliding frame 600 may take necessary devices into or out from the falling space 500' through an opening formed by penetrating one side wall of the building.

By using this sliding frame 600, the user may move into the falling space 500' and perform actions such as replacing the dual module 100 moving vertically within the falling space 500' or taking the object mounted on the dual module 100 into/out from the module section.

The shock absorbing section 30 is formed at the bottom portion of the falling space 500' of the building. The effective gravity control device 2000 includes a shock absorber 31 that absorbs shock applied to the building from the dual module 100 in the space of the shock absorbing section 30. The shock absorber 31 may be installed at the bottom portion of the falling space 500'.

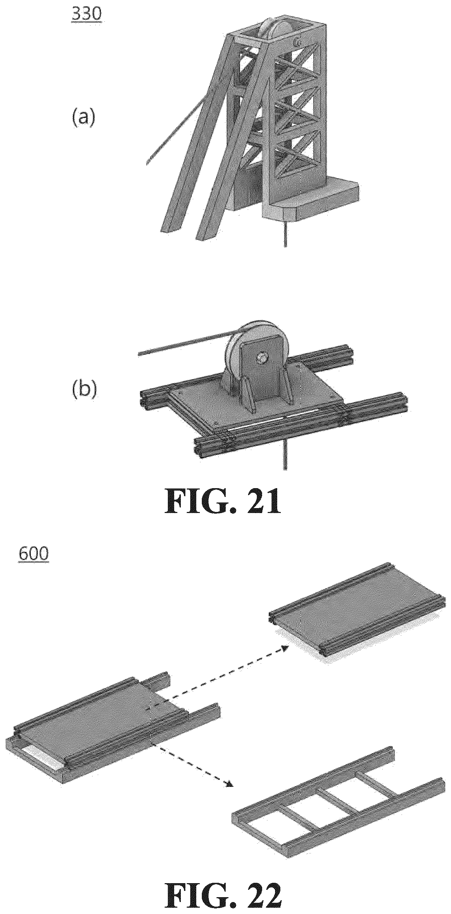

FIG. 20 illustrates the motor 310 included in the effective gravity control device 2000 of the present disclosure, FIG. 21 illustrates the pulley 330 included in the effective gravity control device of the present disclosure, and FIG. 22 illustrates the sliding frame 600 included in the effective gravity control device of the present disclosure.

The motor 310 of the effective gravity control device 2000 corresponds to the motor configuration of the effective gravity control device 1000 described with reference to FIGS. 1 to 10. The configuration of the pulley 330 of the effective gravity control device 2000 may have a modified structure as illustrated in FIG. 21. It may be a structure mounted on a tower type or a structure installed on a sliding frame.

The sliding frame 600 of the effective gravity control device 2000 is configured to provide a path so that necessary equipment may be taken into or out from the falling space 500' through an opening formed by penetrating one side wall of a building or an elevator door. The sliding frame 600 may include a rail member that provides a path, as illustrated in FIG. 22, and a plate member that is a space where necessary equipment such as the dual module 100 is installed.

Although the embodiments of the present disclosure have been described with reference to the attached drawings, those skilled in the art will understand that the present disclosure may be implemented in other specific forms without changing the technical idea or essential features of the present disclosure. Therefore, it should be understood that the embodiments described above are exemplary in all respects and not restrictive.

## Claims

1. An effective gravity control device which is installed so as to have a falling space to be a vertical space in a building, and which implements a zero gravity, microgravity, low gravity, or pseudo gravity state of an internal module mounted in a moving external module, the effective gravity control device comprising:
a dual module comprising an external module in which a movement space for the internal module is provided inside and at least one physical quantity related to movement is controlled, and an internal module that moves independently from the external module within the movement space by an external force transmitted through the external module;
an actuator which is installed at an upper side of a falling space in a space for controlling and monitoring a change in gravity applied to the dual module, and which moves the external module so that, according to a control signal, the external module has at least one physical quantity; and
a sliding frame which is installed in a space at the lower side of the falling space and provides a path for taking the dual module into/out from the falling space.

2. The effective gravity control device of claim 1, further comprising:
a shock absorbing section installed on a bottom portion of the falling space and absorbing shock applied to the building from the dual module.

3. The effective gravity control device of claim 1, further comprising:
a position detection sensor that detects a position of the internal module within the movement space; and
a control unit that generates a control signal that controls at least one physical quantity related to the movement of the external module based on the position of the internal module detected by the position detection sensor.
